# EUROPEAN PATENT APPLICATION

(11) **EP 4 686 065 A2**
(43) Date of publication of application: **28.01.2026**
(21) Application number: 25221988.6
(22) Date of filing: 02.04.2020
(51) Int. Cl.: H02M 1/14

(54) **AUTOMATIC MACHINE AND RELATED METHOD TO CONTROL THE PRODUCTION OR THE PACKAGING OF SMOKING, HYGIENE, FOOD OR PHARMACEUTICAL PRODUCTS**

(30) Priority: 02.04.2019 IT 201900004895
(62) Divisional of application: 20723195.2
(71) Applicant: G.D SOCIETA' PER AZIONI, 40133 Bologna (IT)
(72) Inventor: ZANNI, Paolo, 40133 BOLOGNA (IT); PEDINI, Giampaolo, 40133 BOLOGNA (IT); BRUSI, Marco, 40133 BOLOGNA (IT); FEDERICI, Luca, deceased (IT)
(74) Representative: Studio Torta S.p.A.

(57) **Abstract**

A method to control an automatic machine (1) for the production or the packaging of smoking, hygiene, food or pharmaceutical products; the automatic machine (1) comprising the steps of:
controlling electric motors (5, 6) in an intermittent manner, cyclically alternating a motion state, in which each motor has an acceleration phase (AP) followed by a deceleration phase (DP), and a stop state, in which each electric motor (5, 6) is still; and at least partially supplying power, preferably for more than 50%, during the acceleration phase (AP) of each electric motor (5, 6), to the corresponding first static power converter (7, 8) by means of an electric current provided by the capacitor (17).

## Description

### CROSS-REFERENCE TO RELATED APPLICATIONS

This Patent Application claims priority from Italian Patent Application No. 102019000004895 filed on April 2, 2019, the entire disclosure of which is incorporated herein by reference.

### TECHNICAL FIELD

The present invention relates to an automatic machine for the production or the packaging of smoking, hygiene, food or pharmaceutical products, and to a related method to control the automatic machine.

The present invention finds advantageous application in an automatic packaging machine that produces packets of cigarettes and in the method to control the same, to which the following disclosure will make explicit reference without thereby losing its generality.

### PRIOR ART

An automatic packaging machine comprises a plurality of actuators, which act on the articles to modify their shape, structure or position.

Generally, the actuators comprise electric motors or pneumatic cylinders and are integrally connected to movable operating members having different shapes and sizes designed for processing the articles. The electric motors are usually controlled by respective static power converters, i.e. electric actuators, which control the movements thereof so as to carry out, via the movable operating members, the desired processing on the articles to be packaged.

Often, the movements controlled by the respective actuators are intermittent movements formed by a motion state, comprising, in turn, an acceleration and a deceleration, and by a stop state.

Therefore, the electric energy, that is, the electric current, required for a power supply network, shows a discontinuous trend, with significant peaks during the acceleration of the electric motor, and valleys during the deceleration and/or the stop. In addition, during the deceleration phase, the electric motor (operating as a generator) supplies power to the actuators, which generally provides for the disposing and dissipating of the same.

This discontinuous need determines the need to size the electrical and/or electronic components provided both on-board of the automatic machine and inside the plant where the automatic machine is located, based on the power peak required and not based on the average power.

In addition, in several countries there are differences in the electric current provided by the power supply network. In more industrialized countries, the electric current provided is often already filtered (sudden peaks or drops in electric current are filtered by special bandpass filters) with respect to the network electric current, whereas in less industrialized countries the electric current provided could not be filtered; this entails a high risk that the production is interrupted due to problems with the power supply network (e.g. voltage drops for even a few seconds).

Moreover, in cases where the electric current is filtered, usually a single filter is provided for the whole system, or in any case a single filter for multiple users. Therefore, automatic machines are connected to said filter by means of long conductive cables, which, however, due to their length, cause considerable eddy currents (and therefore energy losses).

### DESCRIPTION OF THE INVENTION

The object of the present invention is to provide an automatic machine for the production or the packaging of smoking, hygiene, food or pharmaceutical products, and a related method to control the automatic machine, which are at least partially free from the drawbacks described above and, at the same time, are simple and inexpensive to manufacture.

According to the present invention, an automatic machine is provided for the production or the packaging of smoking, hygiene, food or pharmaceutical products according to what is claimed in the attached claims. A method to control an automatic machine for the production or the packaging of smoking, sanitary, food or pharmaceutical products is also provided.

The claims describe preferred embodiments of the present invention thus forming an integral part of the present description.

### BRIEF DESCRIPTION OF THE DRAWINGS

The present invention will now be described with reference to the attached drawings, which illustrate some non-limiting examples of embodiments thereof, wherein:
- Figure 1 is a perspective and schematic view of an automatic machine for the production of articles in the tobacco industry;
- Figure 2 is a schematic view of part of the automatic machine of Figure 1 where two electric motors are provided;
- Figure 3 is a schematic view of an embodiment of a power circuit provided with a capacitor of the automatic machine of Figure 1;
- Figure 4 is a schematic view of a different embodiment of the power circuit of Figure 3 in which the capacitor is formed by a plurality of capacitive elements;
- Figure 5 is a schematic view of a discharge circuit connected to the circuit of Figure 3;
- Figure 6 is a graph that illustrates the motion profiles (position, speed and acceleration) of the electric motor of Figure 2 during an operating cycle;
- Figure 7 is a graph that illustrates possible current profiles, in which part of the current required by the load is provided by a power supply network; and
- Figure 8 is a graph that illustrates possible current profiles, in which part of the current required by the load is provided entirely by a capacitor.

### PREFERRED EMBODIMENTS OF THE INVENTION

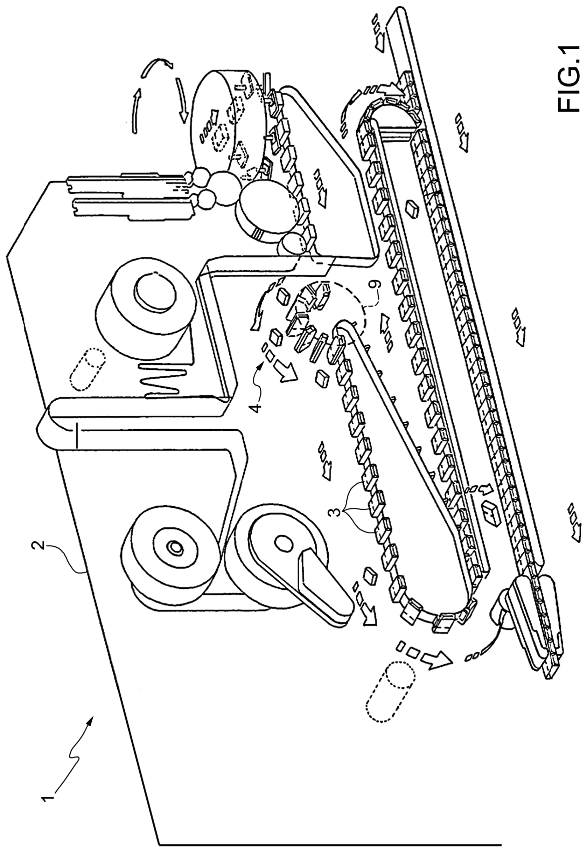

Figure 1 illustrates an automatic machine 1 for the production of articles of the tobacco industry, in particular an automatic packaging machine 1 for the application of a transparent overwrap to packets of cigarettes.

The automatic machine 1 comprises a frame 2 on which a plurality of movable operating members are mounted (such as, for example, grippers, drums, pushers, etc.), which perform production and/or product packaging operations (which, in the non-limiting embodiment illustrated in Figure 1, are packets 3 of cigarettes).

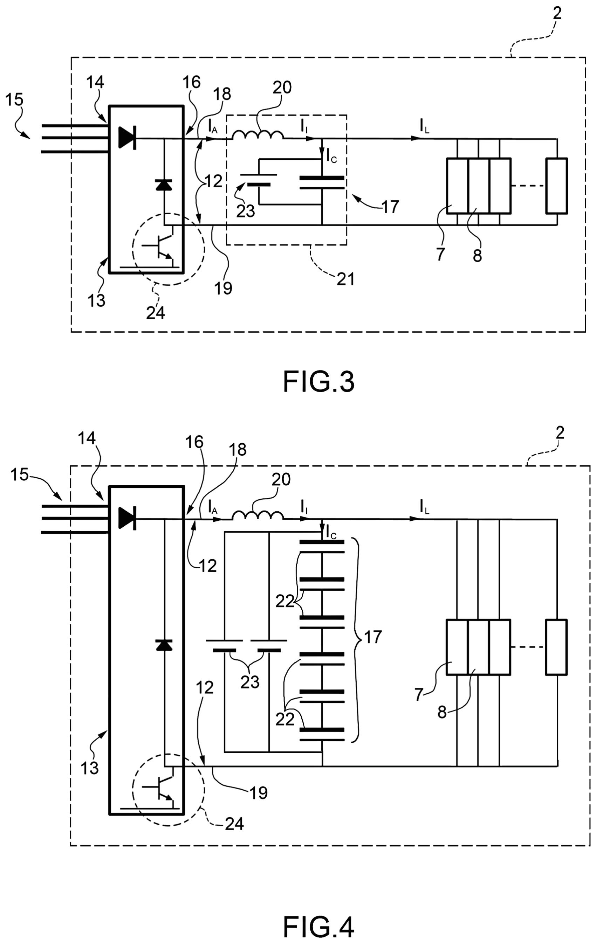

In particular, the automatic machine 1 comprises a wrapping unit 4 provided with a plurality of electric motors, each of which is connected to a respective static power converter (schematically illustrated in Figures 3 and 4).

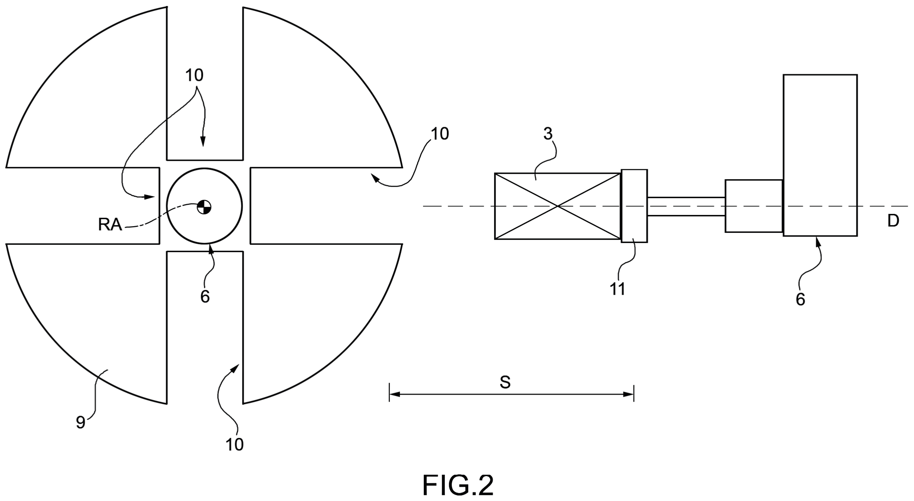

The wrapping unit 4 of the automatic machine 1 of Figure 1 is schematically and frontally illustrated in Figure 2.

The wrapping unit 4 comprises two movable operating members: a movable wheel 9 mounted in a rotatable manner around a central rotation axis RA and provided with seats 10 (in particular pockets) designed for housing the packets 3 of cigarettes; and (at least) one pusher 11 designed to (configured for) push the packets 3 of cigarettes into the seats 10 of the movable wheel 9.

In the non-limiting embodiment illustrated in Figure 2, two electric motors 5 and 6 are provided: the electric motor 5 is coupled to the wheel 9 in order to carry out the rotation of the wheel 9 around the rotation axis RA and is connected to a static power converter 7 (schematically illustrated in Figures 3 and 4) which controls the electric motor 5 so as to rotate the wheel 9 (with the interposition of a reduction unit not illustrated); the electric motor 6 is coupled to the pusher 11 to linearly move the pusher 11 along a direction D and for a predefined stroke S (Figure 2) and is connected to a static power converter 8 (schematically illustrated in Figures 3 and 4) which controls the electric motor 6 (with the interposition of a reduction unit that transforms the circular movement into linear movement).

According to some preferred but non-limiting embodiments, the electric motors 5 and 6 are of the *brushless* type. In particular, the static power converters 7 and 8 are actuators, which control, on the basis of the desired control method, the quantity of current to be provided to the respective electric motors 5 and 6 and therefore control the electric motors 5 and 6.

The wrapping unit 4 of the automatic machine 1 therefore has two electric motors 5 and 6 that perform intermittent movements. In particular, the electric motors 5 and 6 alternate a motion state, comprising an acceleration phase and a deceleration phase, and a stop state.

As illustrated in the power circuit of Figure 3, the automatic machine 1 comprises a DC electric power line 12, to which the static power converters 7 and 8 are connected in parallel (in addition to all the other static power converters of other electric motors of the automatic machine since generally the automatic machine 1 comprises more than two electric motors).

Furthermore, the automatic machine 1 comprises a static power converter 13 (illustrated in Figure 3), in particular a power supply unit, which converts an alternating current into a direct current (including a rectifier) and has two connections: an input connection 14, which can be connected to an external alternating power supply network 15, and an output connection 16, which is connected to the DC electric power line 12.

Advantageously and as illustrated in Figure 3, the automatic machine 1 comprises a capacitor 17 which is physically separate from and independent of the static power converters 7 and 8 and the static power converter 13, and is connected in parallel to the electric power line 12 between the static power converter 13 and the static power converters 7 and 8.

In some non-limiting embodiments, the static power converter 13 is mounted on the frame 2. In other words, the static power converter 13 is arranged near the capacitor 17 and the static power converters 7 and 8. In this way, the losses due to eddy currents decrease considerably, since the length of the electric power line 12 (consisting of two conductors 18 and 19) is significantly reduced compared to the case in which the static power converter 13 is arranged externally and therefore away from the automatic machine 1.

In some non-limiting embodiments not illustrated, in a plant comprising several automatic machines 1, each automatic machine 1 comprises a respective static power converter 13 mounted on the frame 2.

In other non-limiting embodiments not illustrated, in a plant comprising several automatic machines 1, each automatic machine 1 comprises a plurality of static power converters 13 mounted on the frame 2.

Advantageously but not necessarily, as illustrated in Figure 3, the machine 1 comprises an inductor 20 connected in series (i.e. having both terminals in contact with only one of the conductors 18 and 19, and in particular with the conductor 18) to the electric power line 12 between the static power converter 13 and the capacitor 17. In this way, the combination of the inductor 20 with the capacitor 17 forms a second-order filter 21. Therefore, by means of the second-order filter 21, it is possible to limit the voltage drops that can occur in the case of DC circuits.

Advantageously but not necessarily, the capacitor 17 has a capacity of at least 1 F (normally 3-5 F). In this way, it is possible to guarantee the conservation of a given quantity of energy sufficient to supply at least 50% of the current necessary for the electric motors 5 and 6 during the acceleration phase.

In the non-limiting embodiment of Figure 4, the capacitor 17 is formed by a plurality of capacitive elements 22 connected together in series. In particular, as well as the capacitor 17, the series of elements 22 is connected in parallel to the static power converters 7, 8 and 13. In other words, the two external terminals of the series of capacitive elements 22 illustrated in Figure 4 are respectively connected to conductors 18 and 19.

Advantageously but not necessarily, and as illustrated in the circuit of Figures 3 and 4, the machine 1 comprises (at least) one chemical battery 23 connected in parallel to the power electric line 12, in particular beside the capacitor 17. This battery 23 is charged just once by means of a current I_{A} coming from the static power converter 13 and it comes into operation in the event that problems arise with the power supply network 15 (e.g. in case of a voltage drop) supplying energy to the static power converters 7 and 8 to still be able to move the electric motors 5 and 6.

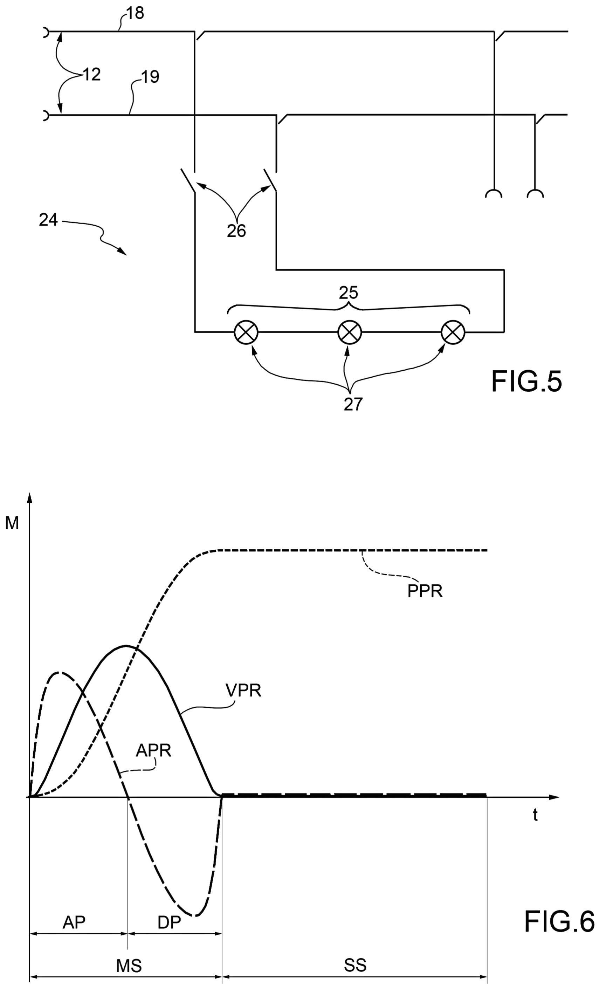

Advantageously but not necessarily, the machine 1 comprises a discharge circuit 24, illustrated in a non-limiting embodiment in Figure 5. The circuit 24 connects the two conductors 18 and 19 of the electric power line 12 to one another and comprises an electrical load 25 and a switch 26. In particular, the switch 26 is kept open when the automatic machine 1 is operating and is closed when the automatic machine 1 is under maintenance. The discharge circuit 24, in particular the electrical load 25, is able to dissipate the residual energy stored by the capacitor 17 and/or by the chemical battery 23 so that it does not harm any maintenance personnel.

According to some non-limiting embodiments, the electric load 25 comprises (is) a resistor 27 (which is capable of absorbing a relevant electric power, of the order of hundreds of Watts, in order to be able to reduce the residual voltage at a fairly rapid rate at the ends of the capacitor 17 and therefore the residual voltage in the electric power line 12).

According to other non-limiting embodiments, the electric load 25 comprises (is) a lighting body. In particular, the lighting body is (at least) a halogen lamp.

In particular, the lighting body is arranged, on frame 2, in a position visible from the outside. In this way, the lighting body acts as a warning light for a possible maintenance technician, who, before carrying out electrical risk operations on the automatic machine 1, will wait for the lighting body to switch off, corresponding to the complete dissipation of the residual energy inside of the capacitor 17 and/or of the battery 23 (therefore reducing the residual voltage in the electric power line 12 to zero).

According to further non-limiting embodiments, the electric load 25 comprises (is) a thermoresistor.

According to the non-limiting embodiment illustrated in Figure 5, the electric load 25 comprises three resistors 27, in particular arranged in series.

According to other non-limiting embodiments not illustrated, the electric load 25 comprises a different type and/or a different number of resistive elements.

The control method of the automatic machine 1 is described in the following.

The method comprises the step of controlling at least (at least part of) the electric motors 5 and 6 in an intermittent manner, cyclically alternating a motion state, in which each motor 5 or 6 has an acceleration phase followed by a deceleration phase, and one stop state, in which each electric motor 5 or 6 is still.

With reference to the non-limiting embodiment of Figure 3, the electric motors 5 and 6 are controlled in an intermittent manner by the respective static power converters 8 and 9.

Figure 6 illustrates possible motion profiles of a motor 5 or 6 controlled in an intermittent manner. In particular, the following are illustrated: the position profile PPR, the speed profile VPR and the acceleration profile APR of the motor 5 or 6. The abscissa axis indicates the time T, while the ordinate axis indicates the module M (especially in different scales). By observing these profiles, it is possible to determine the duration of the motion state MS and the duration of the stop state SS of the motor 5 or 6.

According to some non-limiting embodiments not illustrated, the motors 5 and 6 have intermittent motion profiles different from that indicated in Figure 6.

In the non-limiting case of the wrapping unit 4 illustrated in Figure 2, the motion state of the motor 5 corresponds to the rotation of the motor 5, therefore of the movable wheel 9, around the rotation axis RA. In particular, said rotation is carried out for a portion of the angle around inversely proportional to the number of seats 10. Instead, the motion state of the motor 6 corresponds to the linear movement of the pusher 11 along the direction D (of the stroke S) to insert the packet 3 inside one of the seats 10 of the wheel 9. In particular, in this non-limiting embodiment, the motion state MS of the motor 5 and that of the motor 6 are (at least in part) alternated, i.e. the motion state MS of motor 5 is simultaneous (at least in part) to the stop state SS of motor 6 and vice versa.

As illustrated in the non-limiting embodiment of Figure 6, the motion state MS of the motor 5 or 6 comprises an acceleration phase AP followed by a deceleration phase DP. In particular, since the motors 5 and 6 are moved in an intermittent manner by the static power converters 7 and 8, the motion state MS of each motor 5 or 6 is both preceded and succeeded by a stop state SS, in which the electric motor 5 or 6 is still. In other words, before the acceleration phase AP and after the deceleration phase DP, there are stopping phases during which the motor 5 or 6 is controlled by the respective static power converter 7 or 8 so as to stand still (torque).

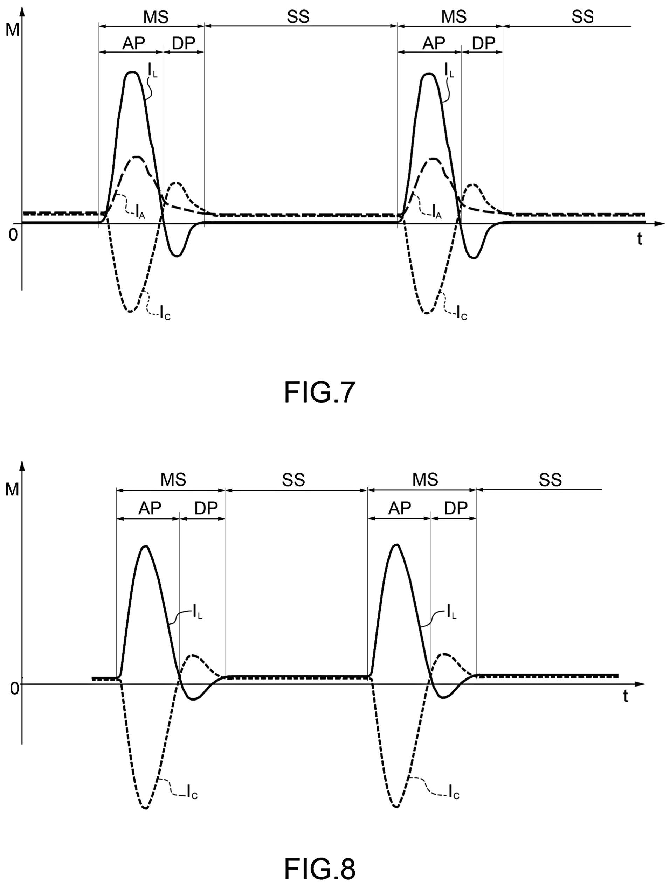

Figure 7 shows possible electric current profiles of one of the motors 5 or 6. In particular, the profile of the electric current I_{A} at the output of the static power converter 13 (corresponding to the electric current I_{I} at the output of the inductor 20) is illustrated, the profile of the electric current I_{C} which passes through the capacitor 17 and the profile of the electric current I_{L} required by the load (i.e. by the static power converters 7 and 8 to move the motors 5 and 6 as desired). By convention, the direction of the electric currents I_{A} (at the output of the converter 13), I_{C} (through the capacitor 17) and I_{L} (required by the load, or by the converters 7 and 8) are considered positive as illustrated in Figures 3 and 4.

In Figure 7 it is also possible to identify the motion state MS, the stop state SS and the acceleration AP and deceleration DP phases. Advantageously, the method comprises a step of supplying power (at least) partially and preferably for more than 50% (in particular for more than 60%), during the acceleration phase AP of each electric motor 5 or 6, the corresponding static power converter 7 or 8 by means of an electric current I_{C} provided by the capacitor 17.

In other words, according to the non-limiting embodiment illustrated by the graphs in Figure 7, during the acceleration phase AP, the capacitor 17 supplies the static power converters 7 and 8 with an electric current I_{C} of over 50%, in particular 60% of the electric current I_{L} required by the converters 7 and 8 to control electric motors 5 and 6.

Advantageously but not necessarily, and as illustrated in Figure 7, the method comprises a further step of charging, during the stop state SS of each electric motor 5 or 6, the capacitor 17 via an electric current I_{A} provided by the static power converter 13. In other words, during the stop state SS, in the event that the capacitor 17 is not fully charged, it is recharged by (at least) part of the electric current I_{A} coming from the static power converter 13.

Advantageously but not necessarily, and as illustrated by the current profiles of Figure 7, the method comprises an additional step of operating each electric motor 5 and 6, during the respective stop state SS, as a brake to keep the corresponding movable operating member still, i.e. the wheel 9 and the pusher 11, respectively. In fact, in Figure 7 it is evident that during the stop state SS, the electric current I_{L} required by the load is constant (in particular equal to a value necessary to keep the motor 5 or 6 at stall torque), but (slightly) different from zero.

Advantageously but not necessarily, and as shown in the graphs of Figure 7, the method comprises the steps of controlling the converters 7 and 8 so as to operate the electric motors 5 and 6, during the respective deceleration phase DP, as generators for generating an electric current I_{G} = -I_{L}, and to convey said electric current I_{G} so as to charge, during the deceleration phase DP of each electric motor 5 or 6, the capacitor 17 by means of an electric current provided by the corresponding static power converter 7 or 8 . In fact, in Figure 7 it is possible to notice how, during the deceleration phase DP, the electric current I_{L} assumes a negative value, while the electric current I_{C} that passes through the capacitor 17 changes sign becoming positive and therefore charging the capacitor 17.

According to some non-limiting embodiments, the capacitor 17 is fully charged during the deceleration phase DP of the motor 5 or 6 by the electric current I_{G} generated by the motor 5 or 6 itself.

According to other non-limiting embodiments, the capacitor 17 is partially charged during the deceleration phase DP of the motor 5 or 6 by the electric current I_{G} generated by the motor 5 or 6 itself. In particular, the full charge of the capacitor 17 is achieved due to the electric current I_{A} coming from the static power converter 13 (or from the inductor 20 if provided).

In the event that a failure of the static power converter 13 occurs, therefore in the event that it is unable to supply power to the electric motors 5 and 6 (for example due to a failure of the converter 13 itself or a failure in supplying energy by means of the power supply network 15), according to a preferred non-limiting embodiment and represented by the graphs in Figure 8, the method comprises a step of fully supplying power to the static power converters 7 and 8 by means of the capacitor 17 and/or by means of the chemical battery 23 connected in parallel to the electric power line 12.

In other words, in the event that the electric current I_{A} coming from the static power converter 13 is, even only momentarily, zero, the electric current I_{L} required by the load, i.e. by the static power converters 7 and 8 is completely satisfied by the electric current I_{C} at the output of the capacitor 17. In fact, in Figure 8 it is possible to notice how the graphs of the electric currents I_{L} and I_{C} are mirror-like relative to the abscissa axis.

Advantageously but not necessarily, also in this case, the energy produced by the electric motors 5 and 6 during the deceleration phase DP is again stored inside the capacitor 17.

Advantageously but not necessarily, the method also comprises a step of fully supplying power to the (i.e. all the electrical users of the) automatic machine 1 by means of the capacitor 17 and/or by means of the chemical battery 23 connected in parallel to the electric power line 12.

Advantageously but not necessarily, and as illustrated by the electric current profiles of Figure 8, the method comprises an additional step of operating each electric motor 5 and 6, during the respective stop state SS, as a brake to keep the corresponding movable operating member still, i.e. the wheel 9 and the pusher 11, respectively. In fact, in Figure 8 it is evident that during the stop state SS, the electric current I_{L} required by the load is constant (in particular equal to a value necessary to keep the motor 5 or 6 at stall torque), but (slightly) different from zero and therefore the same electric current is provided by the capacitor 17 and/or by the battery 23.

According to some non-limiting embodiments not illustrated, the capacitor 17 (and/or the battery 23) supplies to static power the converters 7 and 8, on the basis of the fault upstream of the capacitor 17, different percentages of the electrical current I_{L} required (for example 90%).

Advantageously but not necessarily, in the event that a failure of the static power converter 13 occurs (for example due to a voltage drop in the power supply network 15), the method comprises the further steps of continuing the normal operations of the automatic machine 1 for the production or the packaging of the packets 3 for a buffer time interval which therefore allows production to continue until the static power converter 13 is restored to operation or to stop the automatic machine 1 in a controlled manner (in particular in phase) at the end of this buffer time interval. In some non-limiting cases, this buffer time interval is used for emptying the packets 3 of cigarettes from the automatic machine 1.

Advantageously but not necessarily, the duration of the buffer time interval is variable, and is determined depending on the level of charge of the capacitor 17 and/or of the chemical battery 23 (or of a pack of chemical batteries connected in parallel as illustrated in the Figure 4). In this way, on the basis of the time available before the energy in the capacitor 17 and/or the chemical battery 23 runs out, it is chosen whether to stop the automatic machine 1 in phase and wait for the recovery of the electric current I_{A} coming from the static power converter 13 or to proceed with the emptying of the products still inside the automatic machine 1 and the controlled shutdown of the same.

Advantageously but not necessarily, and as illustrated in the graph of Figure 7, the method comprises the further step of (at least) partially supplying power, during the acceleration phase AP of each electric motor 5 or 6, to the corresponding static power converter 7 or 8 via an electric current I_{A} provided by the static power converter 13.

According to some non-limiting embodiments not illustrated, the motion state of an electric motor 5 or 6 also comprises a constant-speed cruising phase, which is interposed between the acceleration phase AP and the deceleration phase DP. In particular, during the cruising phase of the electric motor 5 or 6, the corresponding static power converter 7 or 8 is (at least) partially supplied with power by an electric current I_{C} provided by the capacitor 17.

Advantageously but not necessarily, the method illustrated so far is iterative and is continuously repeated in the control of the automatic machine 1. In other words, the capacitor 17 is cyclically charged during the deceleration phase DP of each electric motor 5 or 6 and is discharged during the acceleration phase AP of each electric motor 5 or 6.

In the preferred and non-limiting embodiment illustrated in Figure 1, the products processed by the automatic machine 1 are articles of the tobacco industry and in particular packets 3 of cigarettes. According to different embodiments not illustrated, the automatic machine 1 is of a different type (for example a packaging machine, a cellophane wrapper or a packer machine) and therefore the articles are cigarettes, filter pieces, packets of tobacco, cigars, food items, hygiene products, etc.

Although particular reference to a very specific example of embodiment is made in the invention described above, it is not to be considered limited to this example of embodiment, all those alternatives, modifications or simplifications which would be evident to an expert technician in the field, fall within its scope, such as for example: the addition of further actuators, another type of automatic machine other than a tobacco industry packaging machine, a different number of capacitive elements 22, capacitors 17 or chemical batteries 23, a different number of motors or electrical actuators, etc.

The present invention has multiple advantages.

Firstly, it allows to considerably lower the peak of electric current I_{L} required by the load (i.e. by the electric motors) to the power supply network 15 (preferably, more than half of this request is satisfied by the capacitor 17). Since the automatic machine 1 requires a lower current peak, it is therefore possible to reduce the size, and therefore the costs, of the electronics upstream of the capacitor 17 (for example of the static power converter 13).

In addition, the automatic machine 1 can be easily installed, without making changes to the production plant, even in countries where the electrical current is normally not filtered, or in systems where a general rectifier device is not provided.

Finally, the presence of the static power converter 13 on board the automatic machine 1 determines a reduction of the electric eddy currents that are generated in the case of electrical connections through long cables and that generate non-negligible energy losses.

Further advantages related to the process according to the present invention concern the recovery of part of the electrical energy supplied to the electric motors during the deceleration phase, which determines a lowering of the total electric current necessary for the automatic machine 1 to carry out the required operations. In other words, through the electric current generated by the electric motors during the deceleration of the same, and stored inside the capacitor, this electric energy will not be subsequently requested by the power supply network 15, thus determining a net gain in terms of consumption.

## Claims

1. A method to control an automatic machine (1) for the production or the packaging of smoking, hygiene, food or pharmaceutical products; the automatic machine (1) comprising:
- a frame (2);
- a plurality of movable operating members, which are mounted on the frame (2), and are configured for carry out production or packaging operations on the products;
- a plurality of electric motors (5, 6), each moving at least one corresponding movable operating member;
- a plurality of first static power converters (7, 8), each driving a corresponding electric motor (5, 6);
- a DC electric power line (12), to which all the first static power converters (7, 8) are connected in parallel; and
- a second AC/DC static power converter (13), which, at the input, can be connected to an external AC power supply network (15) and, at the output, is connected to the DC electric power line (12);
- a capacitor (17), which is physically separate from and independent of the first static power converters (7, 8) and the second static power converter (13), and is connected in parallel to the electric power line (12) between the second static power converter (13) and the first static power converters (7, 8); the control method comprises the steps of:
controlling at least a part of the electric motors (5, 6) in an intermittent manner, cyclically alternating a motion state, in which each motor has an acceleration phase (AP) followed by a deceleration phase (DP), and a stop state, in which each electric motor (5, 6) is still; and
at least partially supplying power, preferably for more than 50%, during the acceleration phase (AP) of each electric motor (5, 6), to the corresponding first static power converter (7, 8) by means of an electric current provided by the capacitor (17).

2. The method according to claim 1 and comprising the further step of charging, during the stop state of each electric motor (5, 6), the capacitor (17) by means of an electric current provided by the second static power converter (13).

3. The method according to claim 1 or 2 and comprising the further step of causing each electric motor (5, 6) to operate, during the respective stop state, as a brake in order to keep the corresponding movable operating member still.

4. The method according to claim 1, 2 or 3 and comprising the further steps of:
causing each electric motor (5, 6) to operate, during the deceleration phase (DP), as a generator in order to generate an electric current; and
charging, during the deceleration phase (DP) of each motor, the capacitor (17) by means of an electric current provided by the corresponding first static power converter (7, 8).

5. The method according to one of the claims from 1 to 4 and comprising, in the event of failure of the second static power converter (13), the further step of completely supplying power to the first static power converters (7, 8) by means of the capacitor (17) and/or by means of one or more chemical batteries connected in parallel to the electric power line (12).

6. The method according to claim 5 and comprising, in the event of failure of the second static power converter (13), the further steps of:
continuing the normal operations of the automatic machine (1) for a buffer time interval; and, if the failure lasts longer than the buffer time interval,
stopping the automatic machine (1) in a controlled manner at the end of the buffer time interval.

7. The method according to claim 6, wherein the duration of the buffer time interval is variable and is determined depending on the level of charge of the capacitor (17) and/or on the chemical batteries connected in parallel to the electric power line (12).

8. The method according to one of the claims from 1 to 7 and comprising the further step of at least partially supplying power, during the acceleration phase (AP) of each electric motor (5, 6), to the corresponding first static power converter (7, 8) by means of an electric current provided by the second static power converter (13).

9. The method according to one of the claims from 1 to 8, wherein:
the motion state of at least one electric motor (5, 6) comprises a constant-speed cruising phase interposed between the acceleration phase (AP) and the deceleration phase (DP); and
during the cruising phase of the electric motor (5, 6), the corresponding first static power converter (7, 8) is at least partially powered by means of an electric current provided by the capacitor (17).

10. The method according to one of the claims from 1 to 9, wherein the capacitor (17) is cyclically charged during the deceleration phase (DP) of each electric motor (5, 6) and discharged during the acceleration phase (AP) of each electric motor (5, 6).

11. An automatic machine (1) for the production or the packaging of smoking, hygiene, food or pharmaceutical products; the automatic machine (1) comprises:
a frame (2);
a plurality of movable operating members, which are mounted on the frame (2), and are configured for carry out production or packaging operations on the products;
a plurality of electric motors (5, 6), each moving at least one corresponding movable operating member;
a plurality of first static power converters (7, 8), each driving a corresponding electric motor (5, 6);
a DC electric power line (12), to which all the first static power converters (7, 8) are connected in parallel; and
a second AC/DC static power converter (13), which, at the input, can be connected to an external AC power supply network (15) and, at the output, is connected to the DC electric power line (12);
a capacitor (17), which is physically separate from and independent of the first static power converters (7, 8) and the second static power converter (13), and is connected in parallel to the electric power line (12) between the second static power converter (13) and the first static power converters (7, 8);
the automatic machine being **characterized in that** it is configured to carry out the method according to any one of the preceding claims.

12. The automatic machine (1) according to claim 11, wherein the capacitor (17) has a capacity of at least 1 F.

13. The automatic machine (1) according to one of the claims from 11 to 12 and comprising at least one chemical battery (23), which is connected in parallel to the electric power line (12) beside the capacitor (17).

14. The automatic machine (1) according to one of the claims from 11 to 13 and comprising a discharge circuit (24), which connects the two conductors of the electric power line (12) to one another and comprises an electric load (25) and a switch (26), which is kept open when the automatic machine (1) is operating and is closed when the automatic machine (1) undergoes maintenance.

15. The automatic machine (1) according to claim 14, wherein the electric load (25) comprises at least one lighting body, which is preferably arranged in a position visible from the outside of the frame (2) and preferably is halogen.
